# EUROPÄISCHE PATENTSCHRIFT

(11) **EP 1 475 298 B1**
(45) Veröffentlichungstag und Bekanntmachung des Hinweises auf die Patenterteilung: **18.04.2007**
(21) Anmeldenummer: 04010154.5
(22) Anmeldetag: 29.04.2004
(51) Int. Cl.: B62J 6/02, F21S 8/10

(54) **Fahrradscheinwerfer mit einer Leuchtdiode als Lichtquelle**
Bicycle headlamp using a LED as a light source
Phare de bicyclette utilisant une diode électroluminiscente (DEL) comme source lumineuse

(30) Priorität: 09.05.2003 DE 20307281 U; 27.08.2003 DE 10339774
(43) Veröffentlichungstag der Anmeldung: 10.11.2004
(73) Patentinhaber: Hugo Görner GmbH, 73430 Aalen (DE)
(72) Erfinder: Rosenbaum, Gunter, 73434 Aalen (DE); Blanc, Ulrich, 75038 Oberderdingen-Grossvillars (DE)
(74) Vertreter: Sawodny, Michael-Wolfgang

(56) Entgegenhaltungen:
- WO-A-02/36420
- WO-A-98/06975
- DE-A1- 10 110 870
- DE-A1- 10 118 380
- DE-A1- 10 147 290
- DE-A1- 19 739 400
- DE-C2- 19 815 868
- DE-U1- 20 003 339
- DE-U1- 29 914 333
- PATENT ABSTRACTS OF JAPAN Bd. 1997, Nr. 07, 31. Juli 1997 (1997-07-31) & JP 09 058547 A (MACHIDA AKIHIRO), 4. März 1997 (1997-03-04)

## Beschreibung

Die vorliegende Erfindung betrifft einen Fahrradscheinwerfer mit einer Leuchtdiode als Lichtquelle und einer optischen Einrichtung zum Sammeln und Bündeln der von der Lichtquelle emittierten Strahlung.

Bisher werden Fahrradscheinwerfer mit einer Glühbirne ausgestattet, deren Licht mittels Spiegelreflektoren derart ausgerichtet, d.h. abgelenkt oder gebündelt, wird, dass eine geeignete Helligkeit des Scheinwerferlichtes eines Fahrradscheinwerfers erzielt wird, und dass insbesondere die Richtlinien der Straßenverkehrszulassungsordnung StVZO § 22a und der technischen Aufsichtsbehörde TA Nr. 23 eingehalten werden. Als Spannungsquelle dient in der Regel ein Dynamo.

Leuchtdioden sind bei derartigen Frontscheinwerfern bislang lediglich als Zusatzlichtquelle zu einer Glühlampe bekannt geworden, wobei die Leuchtdiode als Standlichtquelle genutzt wurde. Die Leuchtdiode war somit eine zusätzlich zur Hauptlichtquelle installierte Lichtquelle. Eine Schaltungsanordnung, bestehend aus einer Hauptlichtquelle und einer LED-Diode als Standlichtquelle, ist beispielsweise aus der DE-U- 91 16 797 bekannt geworden.

Für Fahrzeugrückleuchten ist der Einsatz von Leuchtdioden, so genannten LEDs, als Hauptlichtquelle nicht nur zur Stand-, sondern auch als Fahrlichtquelle aus unterschiedlichen Schriften bekannt geworden. So zeigt die DE-A-197 58 551 eine Fahrzeugrückleuchte, umfassend mindestens zwei Leuchtdioden als Fahrlicht und/oder als Standlicht.

Die EP-A-0755850 beschreibt eine Leuchtvorrichtung, die für ein Fahrradrücklicht bestimmt ist, wobei die Leuchtdiode eine Manteloberfläche aufweist, die helligkeitsvermindernd behandelt ist, so dass ein Fahrradrücklicht ausgebildet wird, die die Anforderungen der Straßenverkehrszulassungsordnung erfüllt und nur eine einzige Leuchtdiode als Lichtquelle benötigt.

Aus der DE-A-198 30 792 ist eine Schaltungsanordnung, insbesondere für die Beleuchtungsanlage eines Fahrrades bekannt geworden, mit mindestens einer Leuchtdiode und einem Kondensator zum Speichern von Energie für den Betrieb der mindestens einen Leuchtdiode, wobei der Kondensator in Reihe zu der mindestens einen Leuchtdiode liegt.

Auch die Beleuchtungseinrichtung gemäß der DE-A-198 30 792 findet in einem Fahrrad-Rücklicht mit Standlichtfunktion Verwendung. Für eine Verwendung in einem Frontscheinwerfer ist die Schaltungsanordnung gemäß der DE-A-198 30 792 nicht geeignet, da die Schaltungsanordnung der DE 198 30 792 keine Möglichkeit angibt eine Leuchtdiode mit einem konstanten hohen Stromfluss zu versorgen.

Aus der DE-A-197 39 400 ist ein Fahrradrückscheinwerfer bekannt geworden mit einer Leuchtdiode der mit einer entsprechenden Optik die Anforderungen der StVO für Rücklichter mit nur einer einzigen Leuchtdiode erfüllt.

Auch die EP-A-0 755 850 offenbart ein Fahrradrücklicht, das mit Hilfe nur einer einzigen weißen LED die Anforderungen der StVO für Fahrradrücklichter erfüllt.

Die DE-U-299 14 333 offenbart einen Frontscheinwerfer mit Leuchtdioden als Lichtquelle.

Die herkömmlichen Fahrradscheinwerfer, die als Leuchtmittel eine Glühbirne verwenden, haben die folgenden Nachteile. Die Glühwendel kann durch Erschütterungen relativ leicht zerbrechen und die Lebensdauer der Glühbirne ist dementsprechend kurz, weswegen die Frontscheinwerfer stets so gestaltet sind, dass die Glühbirne austauschbar ist.

Es ist Aufgabe der vorliegenden Erfindung, einen Fahrradscheinwerfer anzugeben, der als Lichtquelle eine Leuchtdiode aufweist, wobei der Fahrradscheinwerfer zuverlässig eine ausreichende Lichtstärke abgibt und wartungsarm ist.

Diese Aufgabe wird erfindungsgemäß durch einen Fahrradscheinwerfer gelöst, der ein Frontlicht ist und als Leuchtmittel eine einzige Leuchtdiode aufweist sowie eine optische Einrichtung zum Sammeln und Bündeln der von der Lichtquelle abgegebenen Strahlung, wobei die Leuchtdiode und die optische Einrichtung derart angeordnet und ausgewählt sind, dass ein Lichtfeld mit einer vertikalen und einer horizontalen Achse ausgeleuchtet wird und die maximale Beleuchtungsstärke Eₘₐₓ im Schnittpunkt von vertikaler und horizontaler Achse des Lichtfeldes mehr als 4 Lux, besonders bevorzugt mehr als 7 Lux, insbesondere bevorzugt mehr als 10 Lux in einer Entfernung von 10 m beträgt. Die Leistung der Leuchtdiode, die Weißlicht abgibt, beträgt wenigstens 0,5 Watt, bevorzugt wenigstens 1 Watt.

Ein Fahrradscheinwerfer entsprechend dem Oberbegriff von Anspruch 1 wird in der DE 197 39 400 beschrieben.

In einer besonderen Ausgestaltung der Erfindung ist der Scheinwerfer mit einer Schaltungsanordnung versehen, die einen konstanten Stromfluss von mindestens 400 mA und höchstens 450 mA zur Verfügung stellt. Dies wird durch eine Spannung- bzw. eine Stromwandlung erreicht. Ein konstanter Stromfluss ist zur Funktion des erfindungsgemäßen Scheinwerfers mit einer LED als Leuchtmittel nicht notwendig aber vorteilhaft, da Strom- und Spannungsschwankungen, die Fahrradlichtmaschinen im allgemeinen erzeugen, unterdrückt werden.

In einer besonderen Ausgestaltung der Erfindung beträgt die Beleuchtungsstärke vom Schnittpunkt der vertikalen oder horizontalen Achse aus 4 Grad nach beiden Seiten, mindestens die Hälfte der maximalen Beleuchtungsstärke Eₘₐₓ.

In einer weiteren Ausgestaltung der Erfindung sind Leuchtmittel und die optische Einrichtung derart angeordnet, dass die Beleuchtungsstärke Eₘₐₓ in der Horizontalen 3,4 Grad über dem Schnittpunkt von horizontaler und vertikaler Achse höchstens 0,7 Lux beträgt.

In einer Weiterbildung der Erfindung, sind das Leuchtmittel und der Reflektor derart ausgewählt, dass die Beleuchtungsstärke 5 Grad unter dem Schnittpunkt der horizontalen und der vertikalen Achse mindestens 1,3 Lux beträgt.

Vorteilhafterweise handelt es sich bei der optischen Einrichtung zum Sammeln und Bündeln der Strahlung der Lichtquelle zu einem Strahlbüschel, das ein Lichtfeld mit einer vertikalen und einer horizontalen Achse in einer Ebene ausleuchtet, um einen Reflektor, insbesondere einen verspiegelten Reflektor.

Vorteilhafterweise weist der Reflektor Paraboloidform auf. Alternativ sind Freiformflächen als reflektierende Flächen möglich.

Die Leistung der in dem erfindungsgemäßen Fahrradscheinwerfer eingesetzten Leuchtdiode (LED) beträgt mindestens 0,5 Watt, besonders bevorzugt mehr als 1 Watt bei 18 lm, was einer Beleuchtungsstärke von ungefähr 7 Lux entspricht.

Bevorzugt kann die einzige Diode, die im Fahrradscheinwerfer eingesetzt wird, sowohl als Fahrlicht wie als Standlicht verwendet werden. Hierfür kann eine Schaltungsanordnung auf die Beleuchtung eines Frontscheinwerfers eines Fahrrades angepasst sein und eine Umschaltvorrichtung aufweisen, die die Leuchtdiode des Fahrradscheinwerfers von wenigstens einem ersten Betriebszustand mit hohem Betriebsstrom in einen zweiten Betriebszustand mit niedrigem Betriebsstrom umschaltet.

Besonders bevorzugt erfolgt die Stromversorgung der Leuchtdiode mit einer Konstantstromquelle. Die Konstantstromquelle kann eine Dauerlichtquelle wie beispielsweise eine Batterie umfassen oder einen Fahrdynamo mit einem parallel geschalteten Kondensator. Eine Konstantstromquelle zeichnet sich durch eine konstante Stromabgabe aus und wird insbesondere durch eine stromgesteuerte Ansteuerschaltung erhalten, die eine Stromregelung umfasst, welche z. B. bei abnehmender Batteriespannung den Strom nachregelt, so dass der Ansteuerstrom der Leuchtdiode immer konstant ist und die Batteriekapazität voll ausgenutzt wird. Durch die Versorgung mit einem Konstantstrom ist die Leuchtkraft, das heißt die Strahlungsleistung der Leuchtdiode stets gleich. Durch den erfindungsgemäßen Fahrradscheinwerfer mit Leuchtdiode, insbesondere in Verbindung mit einer stromgesteuerten Ansteuerschaltung, kann erstmals zuverlässig mit nur einer Leuchtdiode, die sowohl für das Fahrlicht wie für das Standlicht eingesetzt werden kann, die Richtwerte einhalten, welche von der StVZO und der TA für Fahrradscheinwerfer gefordert wird. Der Strombedarf der Schaltung ist geringer als bei Fahrradscheinwerfern gemäß dem Stand der Technik. Ein weiterer Vorteil der erfindungsgemäßen Anordnung ist, dass die Lichtausbeute im Betriebszustand Standlichtbetrieb um ein Vielfaches höher ist, als bei Systemen, die neben dem Hauptleuchtmittel noch eine Leuchtdiode (LED) als Zusatzleuchtmittel umfassen, da auch im Standlichtbetrieb die Leuchtdiode im Brennpunkt des Reflektors angeordnet ist und so eine wesentlich größere Leuchtstärke als Systeme mit einer Zusatz-LED als Standlicht aufweist.

Die vorliegende Erfindung wird im Folgenden anhand bevorzugter Ausführungsformen mit Bezug auf die Zeichnungen näher erläutert.

Die Figuren zeigen:
- Fig. 1: ein durch ein Fahrradscheinwerfer ausgerichtetes Lichtfeld auf einer Prüffläche mit vertikaler und horizontaler Achse des Lichtfeldes
- Fig. 2: schematische Anordnung einer LED-Lichtquelle mit einem Paraboloidreflektor
- Fig. 3: Prinzipskizze einer Beleuchtungsanlage eines Fahrrad-Frontscheinwerfers mit einer erfindungsgemäßen LED.
- Fig. 4: Schaltungsanordnung eines erfindungsgemäßen Frontscheinwerfers.

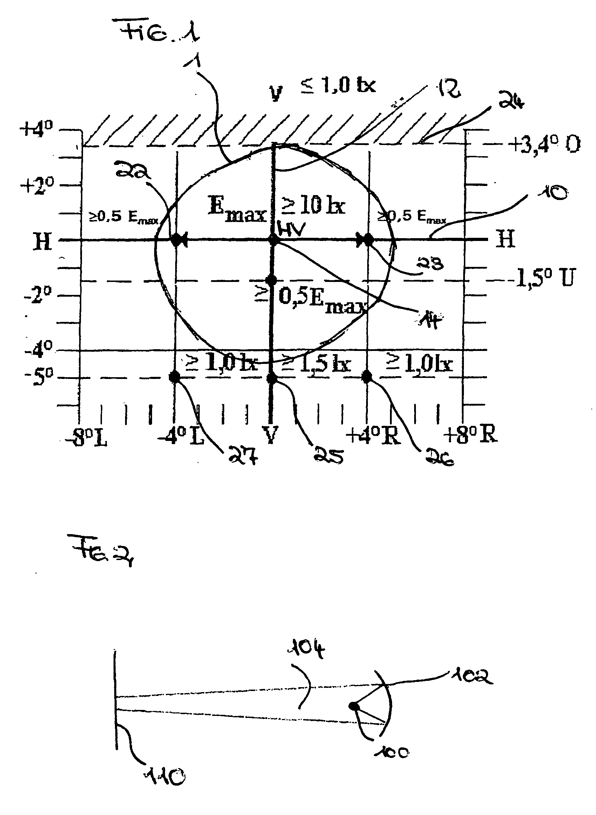

In Figur 1 ist die Prüffläche, die für die Prüfung von Scheinwerfern verwendet wird, dargestellt. Auf die Prüffläche wird in 10 m Entfernung ein Lichtfeld mit Hilfe der erfindungsgemäßen Fahrradscheinwerferanordnung ausgeleuchtet. Das Lichtfeld ist mit der Bezugsziffer 1 gekennzeichnet. Die ausgeleuchtete Fläche weist eine horizontale Achse 10 und eine vertikale Achse 12 aus. Die horizontale Achse 10 fällt mit der Linie H-H der Prüffläche zusammen und die vertikale Achse mit der Linie V-V der Prüffläche. Der Schnittpunkt 14 von horizontaler und vertikaler Achse des Lichtfeldes wird mit Punkt HV bezeichnet. Die maximale Beleuchtungsstärke des ausgeleuchteten Feldes des Scheinwerfers tritt auf der Linie H-H beziehungsweise entlang der horizontalen Achse 10 auf. Das Lichtbündel auf dieser Linie liegt symmetrisch zur vertikalen Achse 12, das heißt zur Linie V-V wie eingezeichnet.

Gemäß der Erfindung beträgt die maximale Beleuchtungsstärke Eₘₐₓ im Schnittpunkt 14 von vertikaler Achse 10 und horizontaler Achse 12 des Lichtfeldes mehr als 4 Lux, besonders bevorzugt mehr als 7 Lux, insbesondere bevorzugt mehr als 10 Lux.

In einer besonders bevorzugten Ausführungsform beträgt die maximale Beleuchtungsstärke 4 Grad nach beiden Seiten, vom Schnittpunkt 14 d. h. vom Punkt HV mehr als 0,5 Eₘₐₓ. Diese Punkte sind mit den Bezugsziffern 22 und 23 gekennzeichnet. Der Schnittpunkt von vertikaler und horizontaler Achse ist mit 14 bzw. HV bezeichnet. In einer weiteren Ausgestaltung der Erfindung sind die Lichtquelle und der Reflektor erfindungsgemäß derart ausgerichtet, dass in der Horizontalen 3,4 Grad über dem Punkt 14, das heißt HV die Beleuchtungsstärke höchstens 0,7 Lux beträgt. Die Grenzlinie ist mit Bezugsziffer 24 bezeichnet.

Besonders bevorzugt ist es, wenn das ausgeleuchtete Lichtfeld 5 Grad unter dem Punkt 14, das heißt HV mindestens 1,3 Lux Beleuchtungsstärke aufweist und von dort aus 4 Grad nach beiden Seiten mindestens 0,8 Lux. Diese Punkte sind mit den Bezugsziffern 25, 26 und 27 bezeichnet.

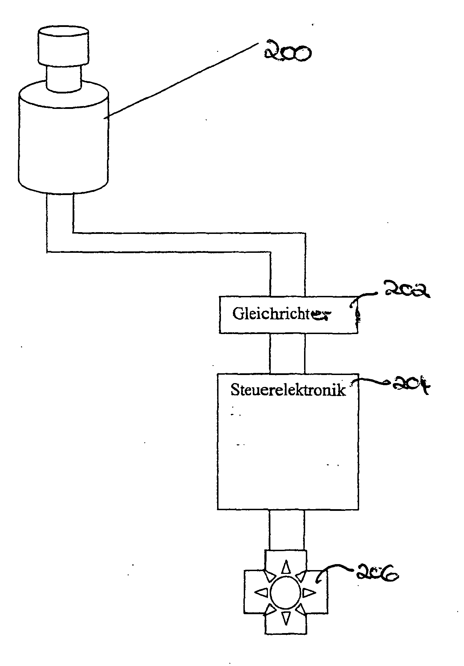

In Figur 2 ist ein erfindungsgemäßer Fahrradscheinwerfer mit einer LED als Lichtquelle und einem Reflektor gezeigt. Die LED trägt die Bezugsziffer 100 und der Reflektor 102. Das von der Lichtquelle, hier der erfindungsgemäßen LED, ausgesandte Licht wird vom Reflektor gesammelt und in ein Strahlbüschel 104 gebündelt. Das Strahlbüschel 104 leuchtet beispielsweise in 10 m Entfernung eine Fläche, beispielsweise eine Prüffläche 110 wie in Figur 1 gezeigt, aus.

Reflektor und LED sind erfindungsgemäß so ausgewählt und zueinander ausgerichtet, dass in der Ebene 110 die benötigten Beleuchtungsstärken gemäß der technischen Anleitung Nr. 23 Scheinwerfer für Fahrräder erreicht wird.

Als Leuchtdiode wird bevorzugt eine Luxeon^{™} 1-Watt Star-Leuchtdiode der Firma Lumi LEDs Lightening LLC, 370 Westremble Road, San Jose, CA 95131, USA verwandt.

Die folgende Tabelle 1 ist für eine erfindungsgemäße Ausführungsform des Fahrradscheinwerfers die gemessene Werte der Beleuchtungsstärke in Lux bei einer Messentfernung von 10 m gemäß StVZO § 22a und TA Nr. 23 für Fahrradscheinwerfer an.

Die in Tabelle 1 verwandten Bezeichnungen stimmen mit den in Figur 1 verwandten Bezeichnungen überein. Hier bezeichnen H und V die horizontale bzw. vertikale Achse. Des weiteren angegeben ist die Lage des Punktes auf der horizontalen und vertikalen Achse in Grad wie in Figur 1 eingezeichnet sowie der Sollwert in Lux und die gemessenen Werte bei Muster 1 und Muster 2 eines erfindungsgemäßen Fahrradscheinwerfers. Wie aus Tabelle 1 deutlich hervorgeht, werden die geforderten Sollwerte für die erfindungsgemäßen Muster erreicht, insbesondere beträgt die maximale Beleuchtungsstärke Eₘₐₓ im Schnittpunkt von vertikaler und horizontaler Achse des Lichtes mehr als 7 Lux.

**Tabelle 1: Beleuchtungsstärke eines erfindungsgemäßen Fahrradscheinwerfers mit einer LED als Beleuchtungsquelle**

| Messpunkte in (°) | | Sollwert in Lux | Beleuchtungsstärke in Lux nach TA Nr. 23 mit dn = 10 m | | | | | | | | |
|---|---|---|---|---|---|---|---|---|---|---|---|
| H | V | | Muster 1 | Muster 2 | | | | | | | |
| | | | | | | | | | | | |
| 0 | + 3.4 | < 0.7 | 0,42 | 0,41 | | | | | | | |
| 4 L | 0 | E max/2 | 3,68 | 3,75 | | | | | | | |
| 0 | 0 | >7.0 | 7,12 | 7,21 | | | | | | | |
| E max | | 1.2*H/V=0 | 7,2 | 7,25 | | | | | | | |
| 4 R | 0 | E max/2 | 3,75 | 3,84 | | | | | | | |
| 0 | -1.5 | E max/2 | 3,8 | 3,78 | | | | | | | |
| 4L | -0.5 | 0.8 | 0,84 | 0,85 | | | | | | | |
| 0 | -0.5 | 1.3 | 1,35 | 1,29 | | | | | | | |
| 4 R | - 0.5 | 0.8 | 0,85 | 0,83 | | | | | | | |

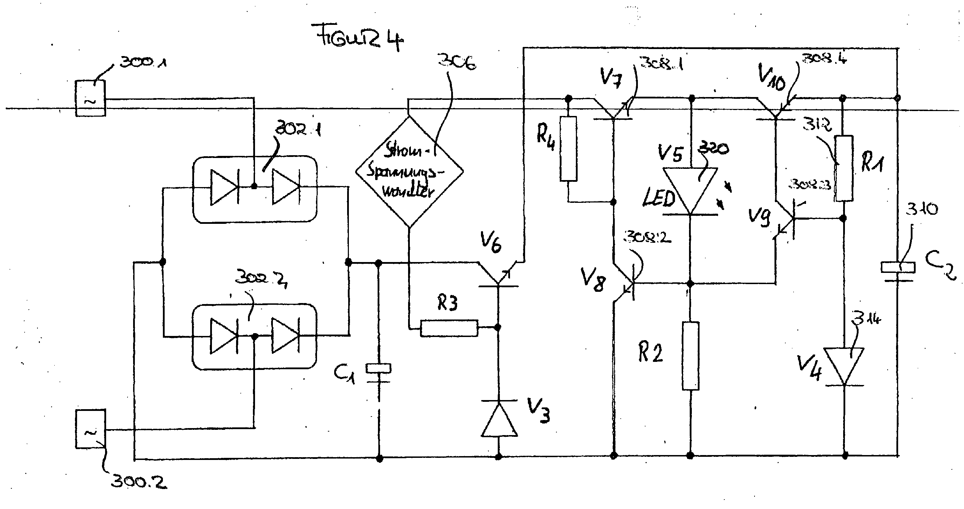

Figur 3 zeigt in einer Übersicht, wie die Leuchtdiode eines erfindungsgemäßen Fahrradscheinwerfers in einem Beleuchtungssystem eines Fahrrades integriert ist. Als Stromquelle wird im vorliegenden Fall keine Dauerstromquelle, sondern ein Dynamo mit 6 V Wechselspannung eingesetzt. Der Dynamo ist mit Bezugsziffer 200 bezeichnet. Die Wechselspannung des Dynamos wird im Gleichrichter 202 gleichgerichtet und an eine Steuerelektronik für den LED-Chip angelegt. Die Ansteuerelektronik 204 ist derart aufgebaut, dass an der LED 206 im wesentlichen stets derselbe Strom anliegt, so dass die Leuchtdiode dieselbe Helligkeit abgibt

Auf der Steuerelektronik befindet sich in einer besonders vorteilhaften Ausführungsversion ein Umschalter, um von einem niedrigem zu einem hohen Stromfluss durch die LED umzuschalten und so vom Fahrbetrieb auf den Standlichtbetrieb

In Figur 4 ist eine erfindungsgemäße Steuerschaltung mit einer LED als Fahrradscheinwerfer gezeigt. Die Anschlüsse an den Dynamo, der eine Wechselspannung liefert, tragen die Bezugsziffern 300.1 und 300.2. Diese vom Dynamo aufgenommene Wechselspannung wird in einem Gleichrichter über zwei Dioden 302.1, 302.2 gleichgerichtet. Daran schließt sich die Ansteuerschaltung an. Die Ansteuerschaltung 304 umfasst einen Strom-Spannungs-Wandler, 306, der dazu dient die am Fahrraddynamo erzeugten ungefähr 6 V Spannung auf eine Spannung von 3,5 V herabzusetzen und den Strom auf einen Wert von ungefähr 350 - 450 mA zu erhöhen, gegenüber einem Strom von ungefähr 210 mA, der vom Fahrraddynamo bei einer anliegenden Spannung von 6 V geliefert werden würde.

Der Umschaltung vom Fahr- auf das Standlicht und umgekehrt dienen in vorliegender Schaltung die Transistoren 308.1, 308.2, 308.3 und 308.4. Das Standlicht kann zum einen vom Kondensator 310 mit Strom versorgt werden oder aber über Batterien, und den Widerstand 312 sowie die Diode 314. Wird das Standlicht über den Kondensator gespeist, so fällt im Laufe der Zeit der Strom stetig ab. Mit dem Abfallen des Stromes einhergeht ein Abnehmen der Leuchtstärke. Wird das Standlicht mit Batterie betrieben, so kann eine konstante Stromversorgung gewährleitstet werden und die Leuchtstärke ist über R1, das heißt Widerstand 312 und V4, das heißt Diode 314 in dieser Schaltung gemäß Figur 4 fest einstellbar.

Wird die Leuchtdauer des Standlichtes auf 3 Minuten beschränkt, so kann man bei einem Stromverbrauch von ungefähr 40mA entsprechend einer Leuchtstärke von ungefähr 0,8 Lux mit 2 AAA 1,5 V Mikro-Batterien ca. 250 mal das Standlicht ein- und ausschalten.

In der Schaltung gemäß Figur 4 ist die Leuchtdiode, die zum einen als Fahrscheinwerfer zum anderen als Standlicht betrieben werden kann mit 320 bezeichnet. Wird die Leuchtdiode 320 mit einer niedrigen Stromstärke betrieben, so fungiert diese als Standlicht, mit einer hohen Stromstärke als Fahrradscheinwerfer. Die Erfindung offenbart somit erstmals einen Fahrradscheinwerfer mit einer Leuchtdiode. Durch eine entsprechende Ansteuerung mit einer Ansteuerelektronik dieser Leuchtdiode ist es möglich, ein- und dieselbe Leuchtdiode zum einen als Fahrlicht und zum anderen als Standlicht zu verwenden.

## Patentansprüche

1. Fahrradscheinwerfer mit einer einzigen Leuchtdiode als Lichtquelle und einer optischen Einrichtung zum Sammeln und Bündeln der von der Lichtquelle emittierten Strahlung, **dadurch gekennzeichnet, dass** der Fahrradscheinwerfer ein Frontlicht ist und die Lichtquelle aus einer einzigen Leuchtdiode besteht, die Weißlicht mit einer Leistung von wenigstens 0,5 Watt, insbesondere wenigstens 1 Watt abgibt, wobei die Leuchtdiode und die optische Einrichtung derart angeordnet sind, dass ein Lichtfeld mit einer vertikalen (V) und einer horizontalen Achse (H) ausgeleuchtet wird und die maximale Beleuchtungsstärke Eₘₐₓ im Schnittpunkt von vertikaler (V) und horizontaler Achse (H) des Lichtfeldes mehr als 4 Lux, besonders bevorzugt mehr als 7 Lux, insbesondere bevorzugt mehr als 10 Lux in einer Entfernung von 10 m von der Leuchtdiode beträgt.

2. Fahrradscheinwerfer nach Anspruch 1, **dadurch gekennzeichnet, dass**
die Beleuchtungsstärke 4° nach beiden Seiten vom Schnittpunkt der vertikalen und der horizontalen Achse des Lichtfeld mindestens die Hälfte der maximalen Beleuchtungsstärke Eₘₐₓ beträgt.

3. Fahrradscheinwerfer nach Anspruch 1 oder 2, **dadurch gekennzeichnet, dass**
die Beleuchtungsstärke in der Horizontalen 3,4 Grad über dem Schnittpunkt von horizontaler und vertikaler Achse des Lichtfeldes und darüber höchstens 0,7 Lux beträgt.

4. Fahrradscheinwerfer nach einem der Ansprüche 1 bis 3, **dadurch gekennzeichnet, dass**
5 Grad unter dem Schnittpunkt von vertikaler und horizontaler Achse mindestens 1,3 Lux beträgt.

5. Fahrradscheinwerfer gemäß einem der Ansprüche 1 bis 4, **dadurch gekennzeichnet, dass**
die optische Einrichtung ein Reflektor ist.

6. Fahrradscheinwerfer nach Anspruch 5, **dadurch gekennzeichnet, dass** der Reflektor ein verspiegelter Reflektor ist.

7. Fahrradscheinwerfer nach einem der Ansprüche 5 bis 6, **dadurch gekennzeichnet, dass**
der Reflektor Paraboloidform aufweist.

8. Fahrradscheinwerfer nach einem der Ansprüche 5 bis 6, **dadurch gekennzeichnet, dass**
der Reflektor Freiformflächen als reflektierende Flächen umfasst.

9. Fahrradscheinwerfer nach einem der Ansprüche 1-8, **dadurch gekennzeichnet, dass**
der Fahrradscheinwerfer eine Ansteuerschaltung aufweist und Reflektor und Leuchtdiode derart angeordnet sind, dass bei Ansteuerung mit einem ersten Strom die maximale Beleuchtungsstärke Eₘₐₓ im Schnittpunkt von vertikaler (V) und horizontaler Achse (H) abgegeben wird und bei Ansteuerung mit einem zweiten Strom ein Standlicht mit einer Beleuchtungsstärke im Bereich von 0,1 - 1 Lux, bevorzugt 0,1 - 0,8 Lux ausgebildet wird.

10. Fahrradscheinwerfer nach einem der Ansprüche 1 bis 9,
**dadurch gekennzeichnet, dass**
der Fahrradscheinwerfer mit einer Schaltungsanordnung versehen ist, die einen konstanten Stromfluss zur Verfügung stellt.

11. Fahrradscheinwerfer nach Anspruch 10,
**dadurch gekennzeichnet, dass**
der konstante Stromfluss mindestens 400 mA und höchstens 450 mA beträgt.

## Claims

1. A bicycle headlight with a single light-emitting diode as a light source and an optical device for collecting and focusing the radiation emitted by the light source, **characterized in that** the bicycle headlight is a front light and the light source consists of a single light-emitting diode which emits white light with a power of at least 0.5 watt, especially at least 1 watt, with the light-emitting diode and the optical device being arranged in such a way that a light field with a vertical axis (V) and a horizontal axis (H) is illuminated and the maximum illumination level Eₘₐₓ at the point of intersection of vertical (V) and horizontal axis (H) of the light field is more than 4 lux, preferably more than 7 lux and more preferably more than 10 lux at a distance of 10 m from the light-emitting diode.

2. A bicycle headlight according to claim 1, **characterized in that** the illumination level at 4° to both sides of the point of intersection of the vertical and horizontal axis of the light field is at least half the maximum illumination level Eₘₐₓ.

3. A bicycle headlight according to claim 1 or 2, **characterized in that** the illumination level is at most 0.7 lux in the horizontal line 3.4 degrees over the point of intersection of horizontal and vertical axis of the light field and above the same.

4. A bicycle headlight according to one of the claims 1 to 3, **characterized in that** it is at least 1.3 lux 5 degrees under the point of intersection of vertical and horizontal axis.

5. A bicycle headlight according to one of the claims 1 to 4, **characterized in that** the optical device is a reflector.

6. A bicycle headlight according to claim 5, **characterized in that** the reflector is a mirrored reflector.

7. A bicycle headlight according to one of the claims 5 to 6, **characterized in that** the reflector has a paraboloidal shape.

8. A bicycle headlight according to one of the claims 5 to 6, **characterized in that** the reflector has freely formed areas as reflective surfaces.

9. A bicycle headlight according to one of the claims 1 to 8, **characterized in that** the bicycle headlight comprises a triggering circuit and the reflector and the light-emitting diode are arranged in such a way that when triggered with a first current the maximum illumination level Eₘₐₓ is emitted in the point of intersection of vertical (V) and horizontal axis (H) and when triggered with a second current a parking light with an illumination level is formed in a range of 0.1 to 1 lux, preferably 0.1 to 0.8 lux.

10. A bicycle headlight according to one of the claims 1 to 9, **characterized in that** the bicycle headlight is provided with a circuit arrangement which provides a constant flow of current.

11. A bicycle headlight according to claim 10, **characterized in that** the constant flow of current is at least 400 mA and not more than 450 mA.

## Revendications

1. Lampe de bicyclette avec une seule diode lumineuse faisant office de source de lumière et un système optique destiné à rassembler et réunir en faisceau les rayons émis par la source de lumière, **caractérisée en ce que** la lampe de bicyclette est un feu avant et que la source de lumière consiste en une seule diode lumineuse qui émet de la lumière blanche d'une puissance d'au moins 0,5 watts, notamment d'au moins 1 watt, la diode lumineuse et le système optique étant disposés de telle sorte qu'un champ lumineux d'axe vertical (V) et d'axe horizontal (H) est illuminé et que l'intensité maximale d'éclairage Eₘₐₓ à l'intersection entre l'axe vertical (V) et l'axe horizontal (H) du champ lumineux est supérieure à 4 Lux, notamment de préférence supérieure à 7 Lux, une préférence particulière étant accordée à une intensité maximale supérieure à 10 Lux à une distance de 10 m de la diode lumineuse.

2. Lampe de bicyclette selon la revendication 1, **caractérisée en ce que** l'intensité d'éclairage à 4° de part et d'autre de l'intersection entre l'axe vertical et l'axe horizontal du champ lumineux est au moins égale à la moitié de l'intensité maximale d'éclairage Eₘₐₓ.

3. Lampe de bicyclette selon la revendication 1 ou 2, **caractérisée en ce que**, à l'horizontale, à 3,4 degrés au-dessus de l'intersection entre l'axe vertical et l'axe horizontal du champ lumineux et au-dessus, l'intensité d'éclairage est égale à 0,7 Lux au maximum.

4. Lampe de bicyclette selon l'une quelconque des revendications 1 à 3, **caractérisée en ce que**,
à l'horizontale, à 5 degrés en dessous de l'intersection entre l'axe vertical et l'axe horizontal, l'intensité d'éclairage est égale à au moins 1,3 Lux.

5. Lampe de bicyclette selon l'une quelconque des revendications 1 à 4, **caractérisée en ce que**
le système optique est un réflecteur.

6. Lampe de bicyclette selon la revendication 5, **caractérisée en ce que** le réflecteur est un réflecteur argenté.

7. Lampe de bicyclette selon l'une quelconque des revendications 5 à 6, **caractérisée en ce que** le réflecteur a la forme d'un paraboloïde.

8. Lampe de bicyclette selon l'une quelconque des revendications 5 à 6, **caractérisée en ce que** le réflecteur comprend des surfaces de forme libre faisant office de surfaces réfléchissantes.

9. Lampe de bicyclette selon l'une quelconque des revendications 1 à 8, **caractérisée en ce que**
la lampe de bicyclette comporte un circuit d'activation et que le réflecteur et la diode lumineuse sont disposés de telle sorte que lors de l'activation avec un premier courant l'intensité maximale d'éclairage Eₘₐₓ est émise à l'intersection entre l'axe vertical (V) et l'axe horizontal (H) et que lors de l'activation avec un deuxième courant un feu de position d'une intensité d'éclairage comprise entre 0,1 et 1 Lux, de préférence entre 0,1 et 0,8 Lux, est formé.

10. Lampe de bicyclette selon l'une quelconque des revendications 1 à 9, **caractérisée en ce que**
la lampe de bicyclette est munie d'un agencement de circuit fournissant un flux constant de courant.

11. Lampe de bicyclette selon la revendication 10, **caractérisée en ce que**
le flux constant de courant est au moins égal à 400 mA et ne dépasse pas les 450 mA.
